# EUROPÄISCHE PATENTSCHRIFT

(11) **EP 3 950 259 B1**
(45) Veröffentlichungstag und Bekanntmachung des Hinweises auf die Patenterteilung: **03.07.2024**
(21) Anmeldenummer: 21186284.2
(22) Anmeldetag: 19.07.2021
(51) Int. Cl.: B29C 45/14, G03B 17/55, H05B 3/84, G03B 11/04, B60R 11/00, B29L 11/00, B29L 31/00

(54) **VERFAHREN ZUM HERSTELLEN EINER STREULICHTBLENDE**
METHOD FOR PRODUCING A LENS HOOD
PROCÉDÉ DE FABRICATION D'UN BLINDAGE ANTI-LUMIÈRE DIFFUSÉE

(30) Priorität: 07.08.2020 DE 102020120869
(43) Veröffentlichungstag der Anmeldung: 09.02.2022
(73) Patentinhaber: K.L. Kaschier- und Laminier GmbH, 48455 Bad Bentheim-Gildehaus (DE)
(72) Erfinder: Schulze Wehninck, Rembert, 82327 Tutzing (DE)
(74) Vertreter: Cohausz Hannig Borkowski Wißgott

(56) Entgegenhaltungen:
- EP-A1- 0 788 724
- EP-A1- 1 577 084
- EP-A1- 3 193 561
- EP-A1- 3 364 716
- EP-B1- 0 788 724
- DE-A1-102006 032 678
- DE-A1-102018 130 103
- DE-A1-102018 133 498

## Beschreibung

Die Erfindung betrifft ein Verfahren zum Herstellen einer in einer Bilderfassungsvorrichtung verwendeten beheizten Streulichtblende.

Ein Hinterspritzen von Heizfolien ist beispielsweise aus der EP3364716A1 oder der DE102014006891 bekannt.

In der vorangemeldeten EP 18 000 969.8-1204 ist ein Verfahren zum Herstellen einer Streulichtblende beschrieben, die in einer Bilderfassungsvorrichtung insbesondere eines Kraftfahrzeuges einliegt und eine Heizfolie aufweist, auf die in einem ersten Arbeitsgang rückseitig eine stabilisierende Kunststoffschicht angespritzt wird und in einem zweiten Arbeitsgang auf die Vorderseite der Heizfolie eine zweite Kunststoffschicht aufgespritzt wird, die eine Streulicht auffangende Struktur vorderseitig aufweist, wie sie aus der EP 3 193 561 B1 bekannt ist. Beide Arbeitsgänge erfolgen in einem Zweikomponenten-Kunststoffspritzguss.

Aufgabe der Erfindung ist es, das Herstellungsverfahren zu vereinfachen und nur einen Spritzgussarbeitsgang anzuwenden, so dass der aufwändige Zweikomponenten-Kunststoffspritzguss entfällt.

Diese Aufgabe wird erfindungsgemäß dadurch gelöst,
- dass in einem ersten Herstellungsschritt eine stabile Kunststoffisolierschicht auf die Rückseite einer Heizfolie aufgeklebt wird, die die Heizfolie in Form hält,
- dass danach das aus Heizfolie und Isolierschicht bestehende Element in ein Spritzgusswerkzeug gelegt wird, in dem auf die Oberseite des Elements eine Kunststoffschicht gespritzt wird, die den das Streulicht auffangenden Boden der Streulichtblende bildet.

Durch das Aufkleben der Kunststoffisolierschicht auf die Rückseite des Heizelements wird ein stabiles Element geschaffen, das in die Spritzgussform einer Spritzgussmaschine gelegt werden kann, um dort die zweite Kunststoffschicht zu erhalten, die die das Streulicht auffangende Struktur aufweist. Ein Zweikomponenten-Kunststoffspritzguss ist damit nicht mehr erforderlich.

Ein auf diese Weise vereinfachtes Herstellungsverfahren ermöglicht eine Automatisierung der Herstellung. Das vorangestellte Ankleben der Isolierschicht vereinfacht die Herstellung wesentlich.

Besonders vorteilhaft ist es, wenn die aufgeklebte Kunststoffisolierschicht die Heizfolie auf mindestens zwei Seitenrändern umfasst. Hierdurch wird die Stabilität des aus Heizfolie und Isolierschicht bestehenden Elements erhöht, so dass seine Handhabung in einem automatisierten Herstellungsverfahren verbessert und vereinfacht ist.

Die Stabilität der Isolierschicht ist erhöht, wenn die Kunststoffisolierschicht einen Vliesstoff aufweist, der mit einem härtenden Kunststoff getränkt ist.

Ein vorteilhaftes Ausführungsbeispiel des erfindungsgemäßen Verfahrens wird im Folgenden beschrieben:
Auf der Rückseite einer Kraftfahrzeugwindschutzscheibe ist eine Bilderfassungsvorrichtung befestigt mit einer Kamera, die den Raum vor dem Kraftfahrzeug erfasst. In Blickrichtung der Kamera weist die Bilderfassungsvorrichtung eine Streulichtblende auf in Form eines gleichschenkligen Trapezes und mit einer Vorderseite, die eine Streulicht auffangende Struktur besitzt, wie dies aus der EP 3 193 561 1 bekannt ist.

Die Streulichtblende besitzt hinter der das Streulicht auffangenden Struktur als Heizelement eine elektrische Heizfolie, die rückseitig mit einer stabilen Isolierschicht aus Kunststoff bedeckt ist und die Heizfolie in Form hält. Vorzugsweise weist die Kunststoffisolierschicht einen Vliesstoff auf, der mit einem härtenden Kunststoff getränkt ist.

Die Isolierschicht wird auf die Rückseite der Heizfolie durch einen Kleber befestigt, so dass nach dem Klebvorgang Heizfolie und Isolierschicht ein stabiles, leicht handhabbares Element bilden.

Die Isolierschicht überragt auf zwei, vorzugsweise allen vier, Seiten die Heizfolie, um die Heizfolienränder L- oder U-förmig zu umfassen.

Das aus Heizfolie und Isolierschicht bestehende stabile Element wird in die Spritzgussform einer Spritzgussmaschine gelegt, in der die zweite Kunststoffschicht vorderseitig aufgespritzt wird, die die das Streulicht auffangende Struktur bildet.

## Patentansprüche

1. Verfahren zum Herstellen einer in einer Bilderfassungsvorrichtung verwendeten beheizten Streulichtblende mit einer Vorderseite, die eine Streulicht auffangende Struktur aufweist, hinter der als Heizelement eine elektrische Heizfolie liegt, die rückseitig mit einer derart stabilen Isolierschicht aus Kunststoff bedeckt ist, dass die Heizfolie in Form gehalten wird, **dadurch gekennzeichnet,**
- **dass** in einem ersten Herstellungsschritt die Kunststoff isolierschicht auf die Rückseite der Heizfolie aufgeklebt wird, und
- **dass** danach das aus Heizfolie und Isolierschicht bestehende Element in ein Spritzgusswerkzeug gelegt wird, in dem vorderseitig auf die Heizfolie eine Kunststoffschicht gespritzt wird, die die das Streulicht auffangende Struktur der Streulichtblende bildet.

2. Verfahren nach Anspruch 1, **dadurch gekennzeichnet, dass** die aufgeklebte Kunststoffisolierschicht die Heizfolie auf mindestens zwei Seitenrändern L- oder U-förmig umfasst.

3. Verfahren nach Anspruch 1 oder 2, **dadurch gekennzeichnet, dass** die Kunststoffisolierschicht einen Vliesstoff aufweist, der mit einem härtenden Kunststoff getränkt ist.

## Claims

1. Method for producing a heated scattered light shade used in an image capturing device, the scattered light shade having a front side which has a structure which intercepts scattered light and behind which an electrical heating foil is located as a heating element, which heating foil is covered on the rear side with an insulating layer of plastic which is so stable that the heating film is held in shape, **characterized in that**
- in a first manufacturing step, the plastic insulating layer is bonded to the rear side of the heating foil, and
- after that the element consisting of heating foil and insulating layer is placed in an injection molding tool in which a plastic layer is injected onto the front side of the heating foil, which plastic layer forms the scattered light intercepting structure of the scattered light shade.

2. Method according to claim 1, **characterized in that** the bonded plastic insulating layer encompasses the heating foil on at least two side edges in an L- or U-shaped manner.

3. Method according to claim 1 or 2, **characterized in that** the plastic insulating layer comprises a nonwoven fabric which is impregnated with a hardening plastic.

## Revendications

1. Procédé de fabrication d'un abat-jour chauffé à lumière diffuse utilisé dans un dispositif de capture d'images, l'abat-jour à lumière diffuse ayant une face avant dotée d'une structure qui intercepte la lumière diffuse et derrière laquelle se trouve un film chauffant électrique en tant qu'élément chauffant, ce film chauffant étant recouvert sur la face arrière d'une couche isolante en plastique si stable que le film chauffant est maintenu en forme, **caractérisé en ce que**
- dans une première étape de fabrication, la couche isolante en plastique est collée sur la face arrière de la feuille chauffante, et
- l'élément composé de la feuille chauffante et de la couche isolante est ensuite placé dans un outil de moulage par injection dans lequel une couche de plastique est injectée sur la face avant de la feuille chauffante, laquelle couche de plastique forme la structure d'interception de la lumière diffusée de l'abat-jour à lumière diffusée.

2. Procédé selon la revendication 1, **caractérisé en ce que** la couche isolante en plastique collée entoure la feuille chauffante en forme de L ou de U sur au moins deux bords latéraux.

3. Procédé selon la revendication 1 ou 2, **caractérisé en ce que** la couche isolante en matière plastique comprend un tissu non tissé imprégné d'une matière plastique durcissante.
